# FASCICULE DE BREVET EUROPEEN

(11) **EP 1 461 178 B1**
(45) Date de publication et mention de la délivrance du brevet: **20.01.2016**
(21) Numéro de dépôt: 02801077.5
(22) Date de dépôt: 28.11.2002
(51) Int. Cl.: B23K 1/005

(54) **Procédé de mise en placed'un revêtement de protection sur la paroi interne d'un tube, tube et notamment tube d'arme réalisé suivant ce procédé.**
VERFAHREN ZUM AUFBRINGEN EINES SCHUTZÜBERZUGS AUF DER INNENWAND EINES ROHRS, ROHR UND INSBESONDERE DURCH DAS VERFAHREN ERHALTENES WAFFENROHR
METHOD FOR SETTING A PROTECTIVE COATING ON THE INNER WALL OF A TUBE, TUBE AND IN PARTICULAR WEAPON TUBE OBTAINED BY SAID METHOD

(30) Priorité: 07.12.2001 FR 0115883
(43) Date de publication de la demande: 29.09.2004
(73) Titulaire: NEXTER Systems, 42328 Roanne (FR)
(72) Inventeur: GUILMARD, Yann, 18000 Bourges (FR); SABOURIN, Pascal, 18000 Bourges (FR); COUPEAU, Jean-Luc, 18340 Plaimpied (FR); PRONER, Alain, 30126 Lirac (FR); DACQUET, Jean-Philippe, 3000 Nimes (FR)
(74) Mandataire: Célanie, Christian
(86) Numéro de dépôt international: PCT/FR2002/004093
(87) Numéro de publication internationale: WO 2003/047802

(56) Documents cités:
- EP-A- 0 743 124
- EP-A- 0 764 493
- US-A- 3 170 227
- US-A- 5 484 974
- US-B1- 6 325 278

## Description

Le domaine technique de l'invention est celui des procédés permettant la mise en place d'un revêtement de protection sur la paroi interne d'un tube.

L'invention vise plus particulièrement les tubes d'armes à feu. EP 0764 493 décrit un procédé de mise en place d'un revêtement de protection sur la paroi interne d'un tube suivant le préambule de la revendication 1.

Les tubes d'armes sont soumis lors du tir à de fortes contraintes thermiques et mécaniques qui conduisent à une usure rapide.

On a cherché à réduire une telle usure en réalisant au niveau de la surface interne du tube de l'arme un dépôt d'un matériau résistant à l'usure tel que du chrome dur.

Pour réaliser un tel revêtement on a recours généralement à un procédé de dépôt électrolytique.

Ce procédé est coûteux. Il met en oeuvre des bains d'électrolytes volumineux pouvant accueillir un tube d'arme (longueur 4 à 6 m) et il consomme ainsi beaucoup d'énergie électrique.

Par ailleurs un dépôt de chrome électrolytique ne présente pas une résistance mécanique suffisante pour le tir des munitions modernes fortement érosives.

On a cherché par ailleurs à réaliser des dépôts de matériaux potentiellement plus résistants car présentant un point de fusion élevée (tungstène, molybdène).

Ces matériaux sont déposés par exemple par placage par explosif ou bien par projection plasma.

Le brevet EP1048921 décrit ainsi un procédé de projection plasma et le brevet EP1059502 décrit un procédé de projection par explosif.

Les procédés mettant en oeuvre des explosifs sont de mise en oeuvre délicate et conduisent à des déformations du tube de l'arme.

Les procédés de projection plasma imposent une opération d'usinage après réalisation du revêtement. Par ailleurs on n'est pas assuré avec de tels procédés d'obtenir un revêtement dont la structure soit homogène sur toute la longueur du tube de l'arme.

C'est le but de l'invention que de proposer un procédé de mise en place d'un revêtement de protection pour la surface interne d'un tube qui ne présente pas de tels inconvénients.

Ainsi, le procédé selon l'invention permet de réaliser à moindre coût un revêtement ne nécessitant que des reprises d'usinage mineures.

L'invention a également pour objet un tube, notamment un tube d'arme présentant une tenue à l'usure améliorée.

Ainsi, l'invention a pour objet un procédé de mise en place d'un revêtement de protection sur la paroi interne d'un tube, procédé caractérisé par les étapes suivantes :
- on réalise une douille cylindrique,
- on met en place sur une surface externe de cette douille une couche d'un matériau thermofusible,
- on usine la douille ainsi revêtue de façon à lui donner un diamètre externe égal au diamètre interne du tube,
- on positionne la douille dans le tube,
- on brase la douille dans le tube en appliquant à l'intérieur de celle ci un moyen de chauffage localisé que l'on fait progresser longitudinalement d'une extrémité à l'autre de la douille, la douille étant réalisée en un matériau ayant un point de fusion supérieur à 1850°C.

Le matériau thermofusible aura de préférence une température de fusion comprise entre 600°C et 1100°C.

La douille pourra être réalisée à partir d'une feuille enroulée sur elle-même et soudée bord à bord.

La soudure de la douille pourra alors être réalisée par faisceau d'électrons ou par laser.

Selon un autre mode de réalisation, la douille pourra être réalisée par usinage ou frittage.

La douille pourra dans tous les cas être réalisée en un matériau choisi parmi les matériaux suivants: Tantale, Tungstène, Molybdène, Chrome, Niobium, Hafnium, Vanadium, Zirconium, ou leurs alliages.

Le matériau thermofusible pourra avantageusement être mis en place par projection thermique d'une poudre du matériau thermofusible.

Le matériau thermofusible pourra être choisi parmi les alliages de cobalt ou les alliages de nickel.

La couche de matériau thermofusible pourra avoir une épaisseur de l'ordre de 1 mm.

De préférence, la couche de matériau thermofusible sera refondue avant usinage afin d'éviter les porosités.

Le moyen de chauffage localisé permettant le brasage pourra comprendre une torche à plasma à arc transféré (PTA) sans apport de poudre, des moyens étant prévus permettant d'assurer un mouvement de rotation relatif de la torche par rapport au tube, rotation combinée à une translation relative de la torche par rapport au tube.

Alternativement, le moyen de chauffage localisé permettant le brasage pourra comprendre une source assurant un chauffage suivant une symétrie cylindrique, des moyens étant prévus pour translater la source par rapport au tube.

L'invention a également pour objet un tube, notamment un tube d'arme, réalisé par un tel procédé, tube qui est caractérisé en ce qu'il comporte un revêtement interne formé d'au moins une douille cylindrique brasée dans le tube.

La douille pourra être réalisée en un matériau à point de fusion élevé. On pourra ainsi choisir le matériau de la douille parmi les matériaux suivants: Tantale, Tungstène, Molybdène, Chrome, Niobium, Hafnium, Vanadium, Zirconium ou leurs alliages.

Le brasage pourra être assuré avec un matériau thermofusible ayant une température de fusion comprise entre 600°C et 1100°C.

Le brasage pourra notamment être assuré avec un matériau choisi parmi les alliages de cobalt ou les alliages de nickel. L'épaisseur de la douille pourra être supérieure ou égale à 1 mm. L'épaisseur du brasage pourra être de l'ordre de 1 mm.

L'invention sera mieux comprise à la lecture de la description qui va suivre d'un mode particulier de réalisation, description faite en référence aux dessins annexés et dans lesquels :
- la figure 1 représente un tube selon l'invention,
- la figure 2a est un schéma résumant différentes étapes initiales de réalisation d'une douille qui est mise en oeuvre dans le procédé selon l'invention,
- la figure 2b est un schéma résumant les différentes étapes du procédé selon l'invention.

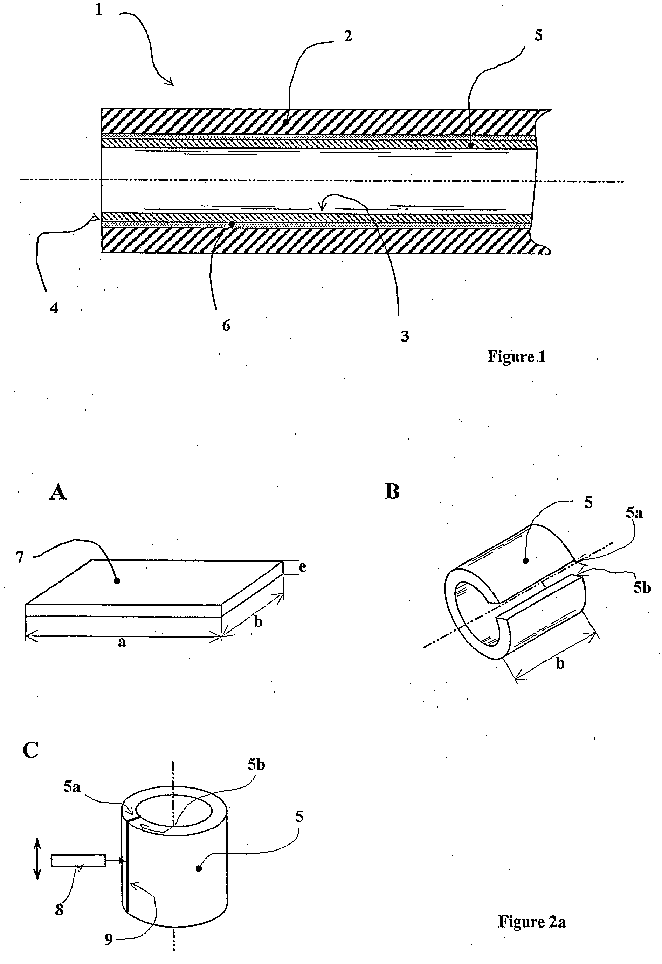

En se reportant à la figure 1, un tube d'arme 1 selon l'invention comporte une âme 2 cylindrique en acier à canon comportant un alésage axial 3.

L'alésage axial comporte un revêtement interne 4 qui est constitué par une douille cylindrique 5, rendue solidaire de l'âme 1 du tube par un brasage 6.

La douille 5 est réalisée en un matériau présentant un point de fusion élevé (supérieur à 1850 °C).

On pourra par exemple réaliser la douille en Tantale, Tungstène, Molybdène, Niobium, Hafnium, Chrome, Vanadium, Zirconium ou bien en un alliage d'un ou plusieurs de ces matériaux. La douille 5 aura une épaisseur d'au moins 1 mm.

Cette douille sera réalisée avec un diamètre externe permettant son introduction dans le tube et elle aura un alésage interne proche du calibre souhaité pour l'arme.

Le brasage 6 permettant de solidariser l'âme 2 du tube et la douille 5 est réalisé avec un matériau thermofusible de type alliage base nickel ou base cobalt. D'autres matériaux sont envisageables. Leurs caractéristiques thermiques et thermomécaniques seront choisies par l'Homme du Métier pour permettre de réaliser le brasage à la température la plus basse possible, tout en étant compatibles avec les niveaux de sollicitations supportés par le tube lors des tirs et tout en étant également compatibles avec la nature métallurgique du matériau de la douille.

Ainsi, les températures de fusion du matériau thermofusible pourront être comprises entre 600 et 1100°C.

La réalisation d'une douille indépendamment de l'âme du tube puis la fixation de celle ci sur le tube permet d'obtenir un revêtement d'épaisseur relativement importante (au minimum 1 mm) tout en garantissant l'homogénéité de la structure et de la géométrie du revêtement partout dans le tube.

Le calibre définitif du tube de l'arme est obtenu avec les tolérances souhaitées par une opération d'usinage ou de rectification d'importance réduite (faible volume de matière à enlever).

On améliore ainsi la tenue mécanique du revêtement aux contraintes de tir et on simplifie la fabrication.

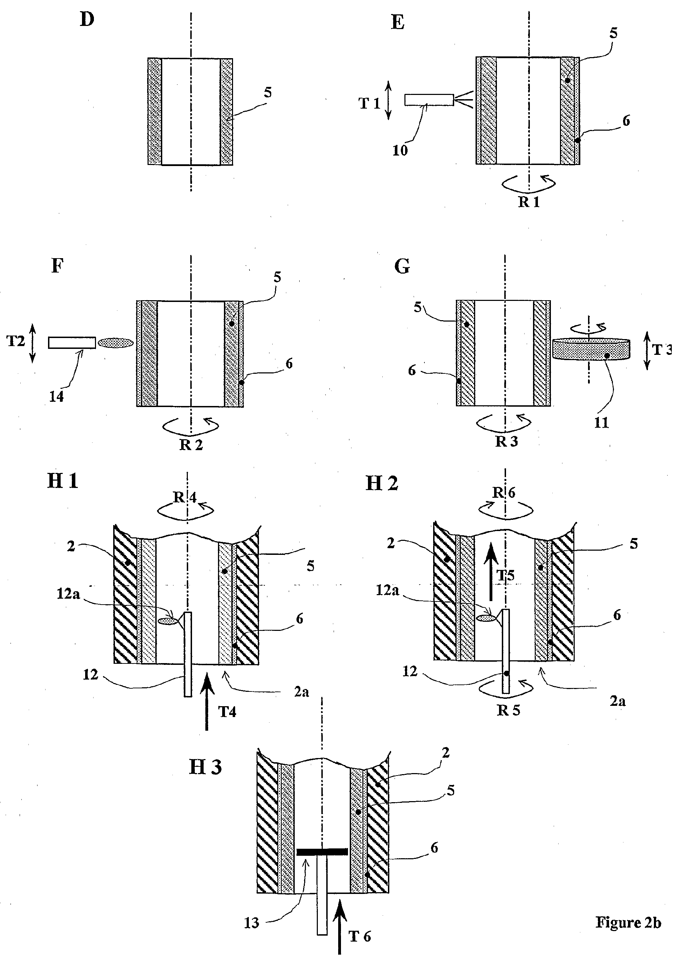

Les figures 2a et 2b montrent différentes étapes d'un procédé permettant de réaliser un tel revêtement.

La figure 2a montre plus particulièrement un mode particulier de réalisation des étapes initiales du procédé.

A l'étape A on dispose d'une feuille ou tôle 7 d'un matériau à point de fusion élevé c'est à dire supérieur à 1850 °C.

On pourra utiliser une feuille de Tantale, Tungstène, Molybdène, Niobium, Hafnium, Chrome, Vanadium, Zirconium, ou d'un alliage associant un ou plusieurs de ces matériaux avec éventuellement des éléments d'addition.

De telles feuilles peuvent être obtenues aisément auprès des fournisseurs de matériaux. Elles sont réalisées par laminage. La feuille 7 représentée ici a une longueur a, une largeur b et une épaisseur e. A l'étape B elle est enroulée de façon à réaliser une douille cylindrique 5.

La longueur b de la douille 5 est représentée ici volontairement réduite de façon à visualiser les étapes de façon simplifiée.

Concrètement on réalisera une douille 5 ayant la longueur nécessaire aux besoins de protection du tube. Ainsi pour un tube d'arme de 120 mm de calibre, on pourra réaliser une douille de 3 à 6 m de long et de 1 mm d'épaisseur pour un diamètre interne de 120 mm. L'enroulement est réalisé sur un mandrin cylindrique.

Après enroulement on effectue à l'étape C la soudure bord à bord des deux lèvres 5a, 5b de la douille 5 par un procédé de fusion (par exemple par faisceau d'électron ou par laser...). Cette soudure est réalisée par exemple à l'aide d'un canon à électrons ou d'un laser 8 qui est déplacé le long d'une génératrice 9 de la douille 5.

Il est possible à titre de variante de réaliser la douille 5 par un autre procédé, par exemple par usinage ou bien par frittage.

La figure 2b montre les principales étapes du procédé selon l'invention.

Le repère D montre en coupe longitudinale la douille 5 obtenue après enroulement et soudure (ou après usinage ou frittage).

Au cours de l'étape E on projette sur la surface externe de la douille 5 une couche 6 d'un matériau thermofusible ayant une température de fusion comprise entre 600°C et 1100°C.

Cette couche est réalisée par projection thermique à l'aide d'un moyen 10 (par exemple une torche à plasma ou un autre moyen de projection thermique d'un matériau thermofusible).

La torche 10 et la douille 5 seront animées d'un mouvement relatif (translation T1 et rotation R1) de façon à assurer une mise en place homogène du matériau 6 sur toute la surface externe de la douille 5. On pourra faire tourner la douille 5 sur elle-même et translater la torche à l'aide d'un chariot (non représenté).

On réalise ainsi un dépôt de matériau de brasage 6 de l'ordre de 1 mm d'épaisseur.

On réalise ensuite à l'étape F une opération de refusion du dépôt afin de résorber la porosité du revêtement.

Pour cela, on échauffe le matériau de brasage 6 à l'aide d'un moyen de chauffage 14 (tel un chalumeau). La température sera au moins égale à la température de fusion du matériau de brasage. Ce moyen de chauffage sera animé d'un mouvement par rapport à la douille 5 (translation T2 et rotation R2) de façon à assurer un échauffement localisé permettant de faire disparaître les porosités tout en maintenant l'intégrité de la couche de matériau de brasage 6. On pourra faire tourner la douille 5 sur elle-même et translater la torche à l'aide d'un chariot (non représenté).

La température et les paramètres de vitesse R2 et T2 seront déterminés par l'Homme du Métier en fonction des caractéristiques du tube et du revêtement (épaisseur du revêtement 6, matériaux du tube et du revêtement, matériau de brasage utilisé...).

Avant de mettre en place la douille dans l'âme du tube il est nécessaire au cours de l'étape G d'usiner la surface externe de la douille 5 pour lui donner un diamètre externe correspondant au diamètre interne de l'âme du tube avec les tolérances d'ajustement souhaitées.

On effectuera par exemple une rectification cylindrique de la couche de brasage 6 à l'aide d'une meule 11 rotative pouvant être déplacée en translation T3 par rapport à la douille 5. Cette dernière sera par ailleurs libre en rotation R3 autour de son axe.

On assurera un ajustement glissant de la douille 5 dans l'âme 2 du tube.

Au lieu d'une rectification de la couche de brasage 6, on pourra procéder à un usinage par tournage.

La douille 5 est ensuite positionnée dans le tube 2.

On procède enfin au brasage de la douille dans l'âme du tube.

Ce brasage est réalisé en appliquant à l'intérieur de la douille 5 un moyen de chauffage localisé que l'on fait progresser longitudinalement d'une extrémité à l'autre de la douille 5.

Suivant une première variante représentée à l'étape H1, le moyen de chauffage localisé comprend une torche 12 à plasma fonctionnant selon la technique à arc transféré (PTA).

Il n'y a pas alors d'apport de poudre, la torche est utilisée uniquement pour chauffer ponctuellement par le plasma 12a la surface interne de la douille 5. Par diffusion thermique, ce chauffage assure la fusion du matériau de brasage 6 et son adhérence avec l'âme du tube.

Afin d'assurer un brasage régulier de toute la surface externe de la douille 5 sur le tube 2, on prévoira des moyens (non représentés) permettant d'assurer un mouvement de rotation R4 relatif de la torche 12 par rapport au tube 2, rotation combinée à une translation T4 de la torche par rapport au tube.

L'Homme du Métier déterminera la température de chauffage ainsi que les paramètres de déplacement (vitesses de translation T4 et de rotation R4) en fonction de l'épaisseur de la couche de brasage 6 ainsi que de la nature des matériaux utilisés.

Suivant une seconde variante représentée à l'étape H2 on pourra alternativement garder le tube de l'arme 2 fixe et mettre en oeuvre une torche animée à la fois d'un mouvement de rotation R5 et d'un mouvement de translation T5.

Il est également possible dans ce cas de combiner une rotation de la torche (rotation R5) avec une rotation du tube en sens inverse (rotation R6 pour l'étape H2).

Le brasage se réalisera ainsi progressivement suivant un "cordon" hélicoïdal continu sur toute la longueur du tube.

L'avantage de ce procédé de brasage est qu'il permet d'éviter les chauffages excessifs du tube de l'arme et de la douille qui pourraient résulter par exemple de l'emploi d'un four. Un chauffage excessif du tube de l'arme conduirait à une perte de caractéristiques mécaniques qui imposerait un nouveau cycle de traitements thermiques pour l'ensemble du tube.

Un tel chauffage pourrait aussi conduire à des relaxations de contraintes résiduelles et à la déformation du tube.

Le chauffage localisé proposé par l'invention permet d'assurer d'une façon simple et économique la fonte du matériau de brasage 6 seul, sans altérer ni le matériau de la douille 5 ni l'acier du tube 2.

L'étape H3 représente une troisième variante dans laquelle le moyen de chauffage localisé comprend une source de chaleur 13 qui permet d'assurer un chauffage ayant une symétrie cylindrique afin d'assurer un brasage localisé sur une génératrice circulaire.

Cette source 13 sera par exemple constituée par un manchon cylindrique chauffant. Le manchon 13 aura un diamètre externe sensiblement égal à celui de la douille 5. Il sera chauffé par exemple par une résistance électrique reliée à un générateur (non représenté).

L'Homme du Métier déterminera la température de chauffage ainsi que les paramètres de déplacement (vitesse de translation T6) en fonction de l'épaisseur de la couche de brasage 6 ainsi que de la nature des matériaux utilisés.

L'épaisseur du manchon 13 sera choisie de façon afin d'assurer un brasage localisé sur une génératrice circulaire.

Des moyens seront là encore prévus pour assurer une translation T6 de la source 13 par rapport au tube 2 (par exemple un chariot).

L'avantage de ce mode de réalisation par rapport au précédent est qu'il n'impose plus de mise en rotation relative du tube et de la source de chaleur.

Seule une translation T6 de la source de chaleur est nécessaire pour assurer un brasage de la douille sur le tube qui soit progressif d'une extrémité à l'autre de la douille.

A titre de variante il est bien entendu possible d'utiliser d'autres sources de chaleur.

Enfin il est bien entendu possible de réaliser le revêtement d'un tube d'arme 1 à l'aide de plusieurs douilles 5 qui seront disposées axialement les unes derrière les autres.

On pourra notamment choisir des matériaux différents pour les différentes parties du tube de l'arme en fonction de la sévérité des sollicitations subies par le tube dans les zones considérées.

## Revendications

1. Procédé de mise en place d'un revêtement (4) de protection sur la paroi interne d'un tube (2), procédé dans lequel :
- on réalise une douille cylindrique (5),
- on met en place sur une surface externe de cette douille (5) une couche (6) d'un matériau thermofusible,
- on usine la douille (5) ainsi revêtue de façon à lui donner un diamètre externe égal au diamètre interne du tube,
- on positionne la douille (5) dans le tube (2), procédé **caractérisé en ce que**:
- on brase la douille (5) dans le tube (2) en appliquant à l'intérieur de celle ci un moyen de chauffage localisé (12, 13) que l'on fait progresser longitudinalement d'une extrémité à l'autre de la douille (5), la douille (5) étant réalisée en un matériau ayant un point de fusion supérieur à 1850°C.

2. Procédé de mise en place d'un revêtement de protection selon la revendication 1, **caractérisé en ce que** le matériau thermofusible a une température de fusion comprise entre 600°C et 1100°C.

3. Procédé de mise en place d'un revêtement de protection selon une des revendications 1 ou 2, **caractérisé en ce que** la douille (5) est réalisée à partir d'une feuille (7) enroulée sur elle-même et soudée bord à bord.

4. Procédé de mise en place d'un revêtement de protection selon la revendication 3, **caractérisé en ce que** la soudure de la douille (5) est réalisée par faisceau d'électrons ou par laser.

5. Procédé de mise en place d'un revêtement de protection selon une des revendications 1 à 3, **caractérisé en ce que** la douille (5) est réalisée par usinage ou frittage.

6. Procédé de mise en place d'un revêtement de protection selon une des revendications 3 à 5, **caractérisé en ce que** la douille est réalisée en un matériau choisi parmi les matériaux suivants: Tantale, Tungstène, Molybdène, Chrome, Niobium, Hafnium, Vanadium, Zirconium, ou leurs alliages.

7. Procédé de mise en place d'un revêtement de protection selon une des revendications 2 à 6, **caractérisé en ce que** le matériau thermofusible est mis en place par projection thermique d'une poudre du matériau thermofusible.

8. Procédé de mise en place d'un revêtement de protection selon une des revendications 2 à 7, **caractérisé en ce que** le matériau thermofusible est choisi parmi les alliages de cobalt ou les alliages de nickel.

9. Procédé de mise en place d'un revêtement de protection selon une des revendications 1 à 8, **caractérisé en ce que** la couche (6) de matériau thermofusible a une épaisseur de l'ordre de 1 mm.

10. Procédé de mise en place d'un revêtement de protection selon une des revendications 1 à 9, **caractérisé en ce que** la couche (6) de matériau thermofusible est refondue avant usinage.

11. Procédé de mise en place d'un revêtement de protection selon une des revendications 1 à 10, **caractérisé en ce que** le moyen de chauffage localisé permettant le brasage comprend une torche à plasma (12) à arc transféré (PTA) sans apport de poudre, des moyens étant prévus permettant d'assurer un mouvement de rotation relatif de la torche (12) par rapport au tube (2), rotation combinée à une translation relative de la torche (12) par rapport au tube (2) .

12. Procédé de mise en place d'un revêtement de protection selon une des revendications 1 à 10, **caractérisé en ce que** le moyen de chauffage localisé permettant le brasage comprend une source (13) assurant un chauffage suivant une symétrie cylindrique, des moyens étant prévus pour translater la source (13) par rapport au tube (2).

13. Application du procédé selon l'une quelconque des revendications précédentes à la réalisation de tubes d'arme dotés d'une protection interne.

14. Tube obtenu par le procédé selon une des revendications 1 à 12 comportant une douille (5) constituée par un matériau à point de fusion supérieur à 1850°C, **caractérisé en ce qu'**on brase la douille (5) sur le tube (2).

## Patentansprüche

1. Verfahren zum Aufbringen einer Schutzummantelung (4) auf die innere Wand eines Rohres (2), bei welchem Verfahren:
- eine zylindrische Hülse (5) hergestellt wird,
- auf der äußeren Fläche dieser Hülse (5) eine Schicht (6) eines wärmeschmelzbaren Materials angebracht wird,
- die so beschichtete Hülse (5) derartig bearbeitet wird, dass ihr ein Außendurchmesser verliehen wird, welcher gleich dem Innendurchmesser des Rohres ist,
- die Hülse (5) in dem Rohr (2) angeordnet wird,
wobei das Verfahren **dadurch gekennzeichnet ist, dass**
- die Hülse (5) in dem Rohr (2) verlötet wird, indem in deren Inneren ein örtlich begrenztes Heizmittel (12, 13) eingebracht wird, welches in Längsrichtung von einem Ende zum anderen der Hülse (5) bewegt wird, wobei die Hülse (5) aus einem Material hergestellt ist, welches einen Schmelzpunkt von über 1850°C besitzt.

2. Verfahren zum Aufbringen einer Schutzummantelung nach Anspruch 1, **dadurch gekennzeichnet, dass** das wärmeschmelzbare Material eine Schmelztemperatur besitzt, die zwischen 600°C und 1100°C liegt.

3. Verfahren zum Aufbringen einer Schutzummantelung nach einem der Ansprüche 1 oder 2, **dadurch gekennzeichnet, dass** die Hülse (5) aus einer Folie (7) hergestellt wird, welche auf sich selbst aufgerollt und an den Kanten verschweißt wird.

4. Verfahren zum Aufbringen einer Schutzummantelung nach Anspruch 3, **dadurch gekennzeichnet, dass** die Schweißung der Hülse (5) durch Elektronenstrahl oder durch Laser erfolgt.

5. Verfahren zum Aufbringen einer Schutzummantelung nach einem der Ansprüche 1 bis 3, **dadurch gekennzeichnet, dass** die Hülse (5) durch spanabhebende Bearbeitung oder Sintern hergestellt wird.

6. Verfahren zum Aufbringen einer Schutzummantelung nach einem der Ansprüche 3 bis 5, **dadurch gekennzeichnet, dass** die Hülse aus einem Material hergestellt wird, welches aus den folgenden Materialien ausgewählt wird: Tantal, Wolfram, Molybdän, Chrom, Niob, Hafnium, Vanadium, Zirkon oder deren Legierungen.

7. Verfahren zum Aufbringen einer Schutzummantelung nach einem der Ansprüche 2 bis 6, **dadurch gekennzeichnet, dass** das wärmeschmelzbare Material durch thermisches Spritzen eines Pulvers des wärmeschmelzbaren Materials aufgebracht wird.

8. Verfahren zum Aufbringen einer Schutzummantelung nach einem der Ansprüche 2 bis 7, **dadurch gekennzeichnet, dass** das wärmeschmelzbare Material aus den Legierungen von Cobalt oder den Legierungen von Nickel ausgewählt wird.

9. Verfahren zum Aufbringen einer Schutzummantelung nach einem der Ansprüche 1 bis 8, **dadurch gekennzeichnet, dass** die Schicht (6) aus wärmeschmelzbarem Material eine Dicke in der Größenordnung von 1 mm besitzt.

10. Verfahren zum Aufbringen einer Schutzummantelung nach einem der Ansprüche 1 bis 9, **dadurch gekennzeichnet, dass** die Schicht (6) aus wärmeschmelzbarem Material vor der spanabhebenden Bearbeitung eingeschmolzen wird.

11. Verfahren zum Aufbringen einer Schutzummantelung nach einem der Ansprüche 1 bis 10, **dadurch gekennzeichnet, dass** das örtlich begrenzte Heizmittel, welches das Löten ermöglicht, einen Plasmabrenner (12) mit übertragenem Lichtbogen (PTA) ohne Zusatz von Pulver aufweist, wobei Mittel dafür vorgesehen sind, es zu ermöglichen, eine relative Drehbewegung des Brenners (12) in Bezug auf das Rohr (2) zu gewährleisten, wobei die Drehung mit einer relativen Verschiebung des Brenners (12) in Bezug auf das Rohr (2) kombiniert wird.

12. Verfahren zum Aufbringen einer Schutzummantelung nach einem der Ansprüche 1 bis 10, **dadurch gekennzeichnet, dass** das örtlich begrenzte Heizmittel, welches das Löten ermöglicht, eine Quelle (13) aufweist, welche ein Heizen gemäß einer zylindrischen Symmetrie gewährleistet, wobei Mittel vorgesehen sind, um die Quelle (13) in Bezug auf das Rohr (2) zu verschieben.

13. Anwendung des Verfahrens nach irgendeinem der vorhergehenden Ansprüche zur Herstellung von Waffenrohren, welche mit einem inneren Schutz versehen sind.

14. Rohr, welches mit dem Verfahren nach einem der Ansprüche 1 bis 12 erzielt wird, aufweisend eine Hülse (5), welche aus einem Material mit einem Schmelzpunkt von größer als 1850°C gebildet wird, **dadurch gekennzeichnet, dass** die Hülse (5) auf das Rohr (2) gelötet wird.

## Claims

1. A process to deposit a protective coating (4) on the inner wall of a tube (2), such process in which:
- a cylindrical sleeve (5) is produced,
- a layer (6) of thermo fusible material is placed on the external surface of this sleeve (5),
- the sleeve (5) thus coated is machined so as to give it the same external diameter as the internal diameter of the tube,
- the sleeve (5) is positioned in the tube (2), process **characterised in that**:
- the sleeve (5) is soldered in the tube (2) by having localised heating means (12, 13) placed inside it and gradually moved longitudinally from one end to the other of the sleeve (5), the sleeve being made of a material having a melting point over 1850 °C.

2. A process to deposit a protective coating according to Claim 1, **characterised in that** the thermo fusible material has a melting point of between 600°C and 1100°C.

3. A process to deposit a protective coating according to one of Claims 1 to 3, **characterised in that** the sleeve (5) is made of a sheet (7) rolled around and welded edge to edge.

4. A process to deposit a protective coating according to Claim 3, **characterised in that** the sleeve (5) is welded by electron beam or laser welding.

5. A process to deposit a protective coating according to one of Claims 1 to 3, **characterised in that** the sleeve (5) is made by machining or sintering.

6. A process to deposit a protective coating according to one of Claims 3 to 5, **characterised in that** the sleeve is made of a material from among the following: Tantalum, Tungsten, Molybdenum, Chromium, Niobium, Hafnium, Vanadium, Zirconium, or their alloys.

7. A process to deposit a protective coating according to one of Claims 2 to 6, **characterised in that** the thermo fusible material is made by thermal projection of a thermo fusible material powder.

8. A process to deposit a protective coating according to one of Claims 2 to 7, wherein the thermo fusible material may be selected from among the cobalt or nickel alloys.

9. A process to deposit a protective coating according to one of Claims 1 to 8, **characterised in that** the thickness of the layer (6) of thermo fusible material is of around 1 mm.

10. A process to deposit a protective coating according to one of Claims 1 to 9, **characterised in that** the layer (6) of thermo fusible material is re-melted before machining.

11. A process to deposit a protective coating according to one of Claims 1 to 10, **characterised in that** the localised heating means used for soldering comprise a plasma torch (12) with transferred arc (PTA) with no added powder, means being provided to ensure a relative rotating movement of the torch (12) with respect to the tube (2), such rotation combined with a relative translation of the torch (12) with respect to the tube (2).

12. A process to deposit a protective coating according to one of Claims 1 to 10, **characterised in that** the localised heating means enabling the soldering comprise a source (13) ensuring cylindrically symmetrical heating, means being provided translate the source (13) with respect to the tube (2) .

13. Applying the process according the above preceding claims to the manufacture of gun tubes incorporating an inner protection.

14. A tube made according the process according one of the claims 1 to 12 comprising a sleeve (5) made of a material having a melting point more than 1850 °C, **characterised in that** the sleeve (5) is soldered in the tube (2).
